Europäisches Patentamt

European Patent Office

Office européen des brevets

(19)

(11) Publication number: **0 034 236**
**B1**

(12) **EUROPEAN PATENT SPECIFICATION**

(45) Date of publication of patent specification: **16.11.83**

(51) Int. Cl.³: **C 22 B 7/00**

(21) Application number: **80304705.9**

(22) Date of filing: **23.12.80**

(54) Separation of chromium from scrap.

(30) Priority: **27.12.79 US 108192**

(43) Date of publication of application:
**26.08.81 Bulletin 81/34**

(45) Publication of the grant of the patent:
**16.11.83 Bulletin 83/46**

(84) Designated Contracting States:
**BE CH DE FR GB IT LI SE**

(56) References cited:
**CA - A - 888 637**
**CA - A - 953 927**
**DE - C - 974 522**
**US - A - 3 082 068**
**US - A - 3 313 601**
**US - A - 3 544 309**
**US - A - 3 577 231**
**US - A - 3 607 236**
**US - A - 4 138 249**

(73) Proprietor: **The International Metals Reclamation Company Inc.**
**Elwood City Pennsylvania 16117 (US)**

(72) Inventor: **Hennion, Francis Joseph**
**Loundsberry Hollow Road, R.D.2**
**Sussex, NJ 07461 (US)**
Inventor: **de Barbadillo, John Joseph**
**Old Ridge Road, R.D. 2**
**Warwick NY 10990 (US)**
Inventor: **Ahmad, Umar Moez Uddin**
**9-C, Carnaby Street**
**Wappinger Falls,NY 12550 (US)**

(74) Representative: **Lockwood, Barbara Ann et al,**
**Thames House (Fifth Floor) Millbank**
**London SW1P 4QF (GB)**

Separation of chromium from scrap

This invention relates to the separation of chromium from scrap metal containing chromium alloyed with other elements. Chromium is an important constituent of a wide variety of alloys, including steels, nickel-based alloys, cobalt-based alloys, and copper-based alloys. The metal occurs naturally as the ore chromite. Large deposits of chromite are not common and those that do exist are mainly in southern Africa. However large amounts of chromium-containing scrap are generated in most industrialized countries and recovery of the chromium therefrom is highly desirable.

The recycling of chromium-containing scrap stainless steel is not particularly difficult because it is possible to refine in the melting vessel as in the AOD process. However, this is not true in the case of complex alloy scrap which may contain as many as ten alloying elements. Such alloys are often very sensitive to contamination, and are produced by processes which do not allow extensive refining in the melting vessel. As a result, producers of complex alloys, such as the so-called superalloys, generally use pure metals for their feed, whilst chromium-containing scrap is downgraded to produce less demanding alloys.

While processes for the separation of the constituents of superalloy scrap have been proposed in the past, none of these processes has, to our knowledge ever been used commercially. This is probably a result of the cost and complexity of the processes. Thus, processes for treating superalloy scrap are described in U.S. Patent 3 544 309 and in "Chemical Reclaiming of Superalloy Scrap," by P. T. Brooks et al, U.S. Department of the Interior, Bureau of Mines, 1969. The processes are mainly directed to recovering nickel and cobalt from the scrap and involve complete dissolution of the scrap, followed by separation of the various metals by hydrometallurgical methods.

One process which avoids the slow and indiscriminate procedure of dissolving the whole of the scrap is described in a published Japanese patent application, 73—44121 by T. Goto. The process described involves an initial pyrometallurgical treatment in which superalloy scrap is melted and blown with oxygen until most of the chromium content of the melt together with such metals as aluminium, titanium, and silicon has been oxidized. Sulphur is then added and the bath is reblown to remove iron and chromium together in a slag high in titanium, aluminium, and silicon, leaving a matte said to contain 60.8% Ni, 14.2% Co, 0.4% Cu, and 24.5% S. The recovery of chromium or iron from the slag is unlikely to be economically feasible.

U.S. Patent 3 313 601 is also worth mentioning in the present context despite the fact that it does not relate to the treatment of scrap. This patent is concerned with the treatment of complex oxide ores, and describes a process in which a chromite ore concentrate is heated to about 870°C in the presence of CS gas and converted to a mixture of chromium sulphide, iron sulphide and iron oxide. The cooled mass is subsequently leached leaving a residue of chromium sulphide.

The present invention provides a process for separating chromium from an alloy or a mixture of alloys which contains chromium alloyed with at least one other metal, comprising melting the alloy or alloys, introducing into the melt an oxidant in an amount sufficient to oxidise any aluminium, titanium, silicon, calcium, magnesium, zirconium, hafnium, tantalum or manganese in the melt, removing oxides thus formed from the melt as a slag, introducing into the melt a sulphiding agent in an amount sufficient to sulphide substantially all the chromium in the melt, cooling the sulphided melt at a slow controlled rate to form a coarse-grained matte consisting mainly of chromium sulphide, fragmenting the cooled matte to an extent sufficient to liberate individual phases thereof, and physically separating chromium sulphide particles from the fragmented matte. The technique of sulphidation followed by slow-cooling is a well known and commercially practised way of separating nickel from copper. To our knowledge, however, there are no reported studies of the effect of slow cooling chromium-containing mattes. We have found, surprisingly, that in a matte which contains chromium as well as nickel, cobalt, and iron, for example, slow cooling produces a structure in which the major part of the chromium is present in individual grains which contain little of the other matte constituents.

The sulphur content of the matte formed is important in that it must be at least sufficient to ensure that all of the chromium is sulphided. In practice, this means that at least twice the stoichiometric amount of sulphur needed to combine with the chromium in the melt is required since we have observed that in the initial stages of sulphidation, formation of chromium sulphide is accompanied by formation of nickel or cobalt sulphide at roughly the same rate. However, it is not necessary to sulphide the other scrap constituents. Indeed we have found it preferable to adjust the sulphur content so that the matte produced is as a whole sulphur deficient. Accordingly, the sulphur content in the sulphided melt is preferably less than 30% and more preferably in the range from 20 to 30%. (All percentages given herein are percentages by weight). A sulphur level of above 20% improves the grindability of the slow-cooled matte.

An additional advantage of producing a sulphur deficient matte is that upon cooling a structure consisting of two or more sulphide phases and a metallic phase is formed. We have found that in this case, very little chromium reports to the metallic phase, and the metallic phase is easy to separate from the sulphide phases. This may be done magnetically if the metallic phase is rich in iron, nickel or cobalt.

Sulphur may be introduced into the melt by adding elemental sulphur to the melt. Alternatively sulphides of metals which are not undesirable in the melt can be used. The use of nickel, cobalt or copper sulphides or mixtures thereof alone or with elemental sulphur, is preferred since in this way a product of the separation process can be recycled. Iron sulphide may be used but to a limited extent in view of the undesirability of having a high iron level in the matte (see below).

Metals such as Al, Si and Ti which would, if present during sulphidation react with the sulphur in preference to chromium or nickel, and therefore necessitate use of a greater amount of sulphur and which might contaminate the chromium-containing phase produced are removed by oxidation. The oxidation might be conveniently carried out by blowing air or oxygen into the melt. Chromite ore and oxidic ores of metals such as niobium may also be used as oxidants and provide overall improved metal recovery as an incidental benefit. Oxidic compounds of iron, nickel, cobalt, copper, chromium, niobium and molybdenum may also be employed as oxidants as may various oxidized metallic wastes and ores. Nickel oxide is particularly useful as an oxidant. Of course if a metallic oxidant is used it should be reducible by the reactive metal or metals to be removed and, furthermore, contamination of the melt by undesirable metals should be avoided. The so-called white metals, Pb, Bi, Sn, Sb, are particularly undesirable. These elements have adverse effects on many alloys in which the recovered metals may be used, and are not eliminated by the process of the invention. Therefore, if such impurities are present in the feedstock they will report in one of the phases of the slow-cooled matte. It is, therefore, desirable to limit the amount of such impurities which may be present in the feedstock.

The melt temperature and amounts of oxidant and sulphiding agents are selected with reference to the charge to be treated. If large amounts of iron are present the charge will only melt at a very high temperature. For this reason scrap containing large amounts of iron should be avoided. Thus, scrap which is iron based, such as stainless steel, can be treated in combination with scrap having a low iron content to dilute the iron content of the mix as a whole. In general, we have found it convenient to operate using a melt temperature in the range from 1250 to 1600°C depending on the composition of the charge. Generally, the iron content of the melt should not exceed 20%, and preferably should not be more than 10%. The chromium content of the initial melt should be at least 5% and may be up to 50%. The chromium in the initial melt may be alloyed with at least one of the metals nickel, cobalt or copper.

The melting by oxidation and sulphidation may be performed in a single externally heated refractory-lined vessel. A high frequency coreless induction furnace is suitable for this pyrometallurgical treatment. However, the process could also be performed in any known tiltable gas-fired or electric furnace. If a gaseous oxidant is used it may be blown into the melt by means of a lance or through tuyeres. Solid oxidants and the sulphiding agent may be added to, or blown into, the melt. A fluxing agent is needed to remove oxidised material as a fluid slag and the vessel used should be designed to facilitate removal of the slag by tapping or skimming.

Slow cooling is required to produce a coarse grained structure which facilitates subsequent separation of the phases. Cooling rates similar to those used in the matte separation process for Cu—Ni separation have been found to be satisfactory in the process of the present invention. Such rates are of the order of magnitude of 7°C per hour for three days or so, after which the ingot can be allowed to cool at a somewhat faster rate. Insulated moulds are necessary to provide such slow cooling rates.

Preferably the matte is fragmented by comminution to particles no greater than 0.15 mm in diameter and more preferably no greater than 75 $\mu$m in diameter, i.e. minus 200 mesh (Tyler). The fragmentation may be effected by coarse crushing on a roll crusher followed by fine grinding. Separation of the fragmented matte may be effected by magnetic separation where appropriate, or by flotation.

The invention will now be discussed in more detail with reference to the following examples.

Example 1

Several sample melts were prepared using in each case a mixture of metallic ingredients intended to simulate a scrap metal charge. Each charge, weighing about 12 kg, was heated to about 1560°C and a flux of fluorspar and lime was added. The melts were then oxidized in differing ways. In the first test (A) the oxidant was a mixture of 25% argon and 75% oxygen. The gas mixture was blown into the melt at a rate of 14 litres per minute for 10 minutes. In the second test (B) the oxidant was chromite ore. 0.744 kg of the ore were added to the melt which was then held at temperature for 15 minutes. In the third test (C) the oxidant was nickel oxide. 0.8 kg of nickel oxide were added to the melt which was held at temperature for 15 minutes. In the fourth test (D) nickel oxide was again used under the same conditions as in test C except that an argon cover was maintained over the melt. After each test the oxide-containing slag was separated from the partly-refined melt and the melt was analysed. Table 1 below shows the analysis (in %) of each feed melt and the respective partly-refined melt.

TABLE 1

| Test | Oxidant used | Melt | Ni | Cr | Fe | Co | Mo | W | Nb | Ta | Al | Ti | Si | Mn |
|------|--------------|------|-----|-----|-----|------|-----|-----|-----|------|-------|------|------|------|
| A | Argon-Oxygen | I* | 57.71 | 14.5 | 5.5 | 10.0 | 4.6 | 2.0 | 1.5 | 1.7 | 0.90 | 0.97 | 0.32 | 0.22 |
|   | Mixture | R* | 58.19 | 14.9 | 6.1 | 10.4 | 4.7 | 1.9 | 1.4 | 1.3 | 0.12 | 0.21 | 0.49 | 0.21 |
| B | Chromite | I* | 59.22 | 14.6 | 4.7 | 10.0 | 4.6 | 1.9 | 1.4 | 1.4 | 0.92 | 0.76 | 0.28 | 0.16 |
|   | Ore | R* | 60.11 | 15.9 | 5.4 | 10.1 | 4.6 | 1.8 | 1.3 | <0.1 | 0.02 | 0.04 | 0.42 | 0.16 |
| C | Nickel | I* | 59.11 | 14.5 | 4.5 | 9.9 | 4.5 | 2.1 | 1.4 | 1.7 | 0.8 | 0.85 | 0.32 | 0.19 |
|   | Oxide | R* | 62.24 | 14.3 | 4.8 | 10.3 | 4.5 | 1.8 | 1.2 | 0.4 | <0.05 | 0.02 | 0.20 | 0.12 |
| D | Nickel Oxide | I* | 58.57 | 14.9 | 4.8 | 10.2 | 4.7 | 1.4 | 1.4 | 1.5 | 1.17 | 0.82 | 0.30 | 0.15 |
|   | (with argon cover) | R* | 61.04 | 14.7 | 4.9 | 10.2 | 4.6 | 1.7 | 1.3 | 0.8 | 0.18 | 0.03 | 0.34 | 0.12 |

I=Initial
R=Refined

**0 034 236**

As may be seen from Table 1, there were differences in the effectiveness of the different oxidants in removing reactive metals from the melts. The Al and Ti levels were lowered satisfactorily in all of the tests. The Si and Mn levels were lowered only when nickel oxide was used as the oxidant, while in the case of Ta better removal was achieved with the solid oxidants than with the gaseous mixture. Comparison of the results obtained in tests C and D show that in the absence of the argon cover, oxygen in the atmosphere above the melt contributed to the refining achieved.

Example 2

The partly refined melt obtained in test B of Example 1 was sulphided as follows. To 6 kg of the melt, at a temperature of 1560°C was added 1.875 kg of nickel sulphide in lump form. The power was turned off and the furnace temperature allowed to drop naturally. 1.5 kg of elemental sulphur, in the form of briquettes, was then added to the melt. After this addition the matte formed was analysed and was found to have the following composition:—

| | |
|---|---|
| Ni: | 53.4% |
| Cr: | 10.1% |
| Fe: | 3.4% |
| Co: | 6.4% |
| Mo: | 2.9% |
| W: | 1.1% |
| Nb: | 0.8% |
| Ta: | 0.1% |
| S: | 24.5% |

The matte was cooled at a rate of about 130°C per hour, and then sectioned and examined by electron beam micro-probe analysis. It should be noted that the cooling rate was rather higher than the 7°C per hour specified as suitable above. This was because of difficulties in obtaining the desired slow cooling with the small ingot size used for experimental purposes. The coarse-grained structure was found to consist of four distinct phases, a chromium sulphide phase, a nickel sulphide phase, a heavy metal sulphide phase and a metallic phase. Table 2 gives the analysis of each phase as obtained with the micro-probe. It should be borne in mind that probe analyses are generally reliable only where the concentration of a given element exceeds about 1% or so.

TABLE 2

| Phase | Chromium sulphide | Nickel sulphide | Heavy metal sulphide | Metallic |
|---|---|---|---|---|
| % Cr | 40 | 0.1 | 3 | 0.06 |
| % Ni | 8 | 66 | 5 | 74.5 |
| % Co | 4 | 4.5 | 2.5 | 14 |
| % Fe | 1 | — | 0.8 | 8.5 |
| % Mo | 1 | — | 17.3 | 1 |
| % S | 46 | 23 | 37.5 | 0.5 |
| % Nb | — | — | 23.5 | — |
| % W | — | — | 12 | — |

The quantity of heavy metal sulphide phase was smaller than that of any of the other sulphide phases; as a result substantially all the chromium was present in the chromium sulphide grains.

Example 3

A sulphidation operation similar to that described with respect to Example 2 was carried out on a similar oxidized melt, except that the amount of sulphiding agent was selected to give a matte more deficient in sulphur than in the previous example. A sample of the matte produced in this case was found by chemical analysis to contain:

| | |
|---|---|
| Ni: | 58.6% |
| Cr: | 10.2% |
| Fe: | 3.3% |
| Co: | 7.0% |
| Mo: | 3.1% |
| W: | 1.3% |
| Nb: | 0.9% |
| Ta: | 0.2% |
| S: | 14.7% |

5

**0 034 236**

After cooling as in Example 2, the matte was found to consist of only three phases chromium sulphide, nickel sulphide and metallic phases. Heavy metals apparently were distributed among these phases but were not detected by micro-probe analysis due to their low levels of concentration. Table 3 shows the micro-probe analyses of the three phases observed.

TABLE 3

| Phase | Chromium sulphide | Nickel sulphide | Metallic |
|---|---|---|---|
| % Cr | 42 | 0.06 | 2.5 |
| % Ni | 8.8 | 70 | 71 |
| % Co | 2.4 | 2.2 | 12 |
| % Fe | 0.5 | 0.1 | 6.2 |
| % Mo | 0.7 | 0.09 | 4.3 |
| % S | 48 | 28.8 | 0.8 |

The low level of sulphur was found to lead to some chromium being present in the metallic phase, a situation regarded as being undesirable due to creation of problems in the leaching circuit, and a somewhat lower level of iron and molybdenum reporting in the chromium sulphide phase.

Example 4

Another sulphidation operation was carried out on a similar oxidized melt to that of Examples 2 and 3, except that in this case a matte having a higher sulphur content was produced by increasing the amount of nickel sulphide and elemental sulphur used. The matte was found by chemical analysis to contain:

| | |
|---|---|
| Ni: | 50.6% |
| Cr: | 9.1% |
| Fe: | 3.1% |
| Co: | 5.8% |
| Mo: | 2.6% |
| W: | 1.0% |
| Nb: | 0.7% |
| S: | 29.4% |

On cooling the matte produced a coarse-grained structure which was found to consist almost entirely of nickel sulphide and chromium sulphide phases. A third metallic phase was present in too small a quantity for it to be accurately analysed by micro-probe, and no separate heavy metal phase was observed. The micro-probe analysis of each of the two sulphide phases is shown in Table 4.

TABLE 4

| Phase | Chromium sulphide | Nickel sulphide |
|---|---|---|
| % Cr | 33 | 0.05 |
| % Ni | 10 | 67 |
| % Co | 5 | 2.5 |
| % Fe | 2.7 | 0.2 |
| % Mo | 3.3 | — |
| % S | 41.5 | 28 |

It will be seen that at this high sulphur level a lower Cr:Ni ratio was achieved in the chromium sulphide grains than in Examples 2 and 3 where the mattes contained less sulphur. It would therefore appear that the sulphur level to aim at is one high enough to ensure total sulphidation of chromium, but not so high as to saturate the matte. In the case of feeds tested, a sulphur content of about 25% appears to result in maximisation of the amount of chromium reporting to the chromium sulphide phase, and concentration of the heavy metals in a separate phase.

Example 5

Some tests were carried out to investigate the physical separation of the phases in a slow-cooled matte. Again, the matte structure was not as coarse-grained as might be desired owing to difficulties in achieving a sufficiently slow cooling with the relatively small ingot size used for experimental purposes.

6

# 0 034 236

A combination of magnetic separation and classification was used to separate sulphides from metallic phases. Thus, 100 g sample of a 23% S slow-cooled matte was subjected to a three stage magnetic separation which produced 475 g of a non-magnetic fraction, and 524 g of a magnetic fraction. The latter, after grinding and screening, was divided into 120 g of material finer than 43 $\mu$m (325 mesh) and 404 g of coarser material. By analysing the fractions for sulphur and estimating the sulphide content of each fraction, the chromium distribution between the fractions could be estimated on the basis of our finding that chromium is present only in the $Cr_2S_3$ phase of such a matte. Such a calculation gave the following chromium distribution:

| Fraction | Cr Distribution (%) |
|---|---|
| +325 Magnetic | 4 |
| —325 Magnetic | 14 |
| Nonmagnetic | 82 |

Froth floatation experiments were also carried out in which a high grade nickel concentrate was separated from the ground matte. The chromium concentrate obtained represented 70% of the total amount of chromium present in the matte, and contained approximately equal concentrations of nickel and chromium with little of the other metals present in the matte. Better chromium-nickel separation could no doubt be achieved by optimization of the flotation procedure.

## Claims

1. A process for separating chromium from an alloy or a mixture of alloys which contains chromium comprising melting the alloy or alloys, introducing into the melt an oxidant in an amount sufficient to oxidise any aluminium, titanium, silicon, calcium, magnesium, zirconium, hafnium, tantalum or manganese in the melt, removing oxides thus formed from the melt as a slag, introducing into the melt a sulphiding agent in an amount sufficient to sulphide substantially all the chromium in the melt, cooling the sulphided melt at a slow controlled rate to form a coarse-grained matte consisting mainly of chromium sulphide, fragmenting the cooled matte to an extent sufficient to liberate individual phases thereof, and physically separating chromium sulphide particles from the fragmented matte.

2. A process as claimed in claim 1 in which the chromium in the alloy or mixture of alloys is alloyed with at least one of the metals nickel, cobalt or copper.

3. A process as claimed in Claim 1 or Claim 2 wherein the sulphiding agent is elemental sulphur, nickel sulphide, cobalt sulphide, copper sulphide or a mixture thereof.

4. A process as claimed in any preceding claim wherein the amount of said sulphiding agent used is sufficient to produce a sulphided melt containing at least twice the amount of sulphur stoichiometrically required to sulphide all the chromium present in the melt.

5. A process as claimed in Claim 4 wherein the amount of sulphiding agent used is such that the sulphided melt contains from 20 to 30 percent by weight of sulphur.

6. A process as claimed in any preceding claim wherein the cooled melt is fragmented by comminution to particles having a diameter not greater than 75 $\mu$m.

7. A process as claimed in any preceding claim wherein the oxidant is iron oxide, nickel oxide, chromium oxide, cobalt oxide, copper oxide, niobium oxide or molybdenum oxide.

## Patentansprüche

1. Verfahren zur Ausscheidung von Chrom aus einer chromhaltigen Legierung oder Mischung von Legierungen, wobei das Verfahren darin besteht, die Legierung bzw. die Legierungen zu schmelzen, der Schmelze ein Oxidationsmittel in ausreichender Menge zuzugeben, um alles etwa darin enthaltene Aluminium, Titan, Silizium, Kalzium, Magnesium, Zirkon, Hafnium, Tantal oder Mangan zu oxidieren, die auf diese Weise gebildeten Oxide als Schlacke aus der Schmelze zu entfernen, der Schmelze ein Sulfidierungsmittel in ausreichender Menge zuzugeben, um das gesamte in der Schmelze enthaltene Chrom substantiell zu sulfidieren, die sulfidierte Schmelze langsam unter kontrollierten Bedingungen abzukühlen, so daß sich eine grobkörnige, hauptsächlich aus Chromsulfid bestehende Matte bildet, die abgekühlte Matte in ausreichendem Maß aufzuspalten, um die einzelnen Phasen freizusetzen, und die Chromsulfidpartikel physikalisch von der gespalteten Matte zu separieren.

2. Verfahren nach Anspruch 1, dadurch gekennzeichnet, daß das Chrom in der Legierung bzw. der Mischung von Legierungen mindestens mit einem der Metalle Nickel, Kobalt oder Kupfer legiert ist.

3. Verfahren nach Anspruch 1 oder Anspruch 2, dadurch gekennzeichnet, daß es sich bei dem Sulfidierungsmittel um elementaren Schwefel, Nickelsulfid, Kobaltsulfid, Kupfersulfid oder eine Mischung derselben handelt.

4. Verfahren nach einem der vorangehenden Ansprüche, dadurch gekennzeichnet, daß die Menge des besagten Sulfidierungsmittels ausreichend ist, um eine sulfidierte Schmelze zu bilden, die

7

mindestens doppelt soviel Schwefel enthält als stöchiometrisch erforderlich ist, um das gesamte in der Schmelze enthaltene Chrom zu sulfidieren.

5. Verfahren nach Anspruch 4, dadurch gekennzeichnet, daß Sulfidierungsmittel in einer solchen Menge zugegeben wird, daß die sufidierte Schmelze Schwefel in einem Gewichtsverhältnis von 20 bis 30 Prozent enthält.

6. Verfahren nach einem der vorangehenden Ansprüche, dadurch gekennzeichnet, daß die abgekühlte Schmelze durch Zerkleinerung in Teilchen mit einem Durchmesser von höchstens 75 $\mu$m aufgespaltet wird.

7. Verfahren nach einem der vorangehenden Ansprüche, dadurch gekennzeichnet, daß es sich bei dem Oxidationsmittel um Eisenoxid, Nickeloxid, Chromoxid, Kobaltoxid, Kupferoxid, Nioboxid oder Molybdänoxid handelt.

**Revendications**

1. Un procédé pour la séparation de chrome à partir d'un alliage ou d'un mélange d'alliages contenant du chrome selon lequel on fait fondre l'alliage ou les alliages, on introduit dans la masse fondue un oxydant en quantité suffisante pour oxyder tout aluminium, titane, silicium, calcium, magnésium, zirconium, hafnium, tantale ou mangénèse présent dans la masse fondue, on sépare les oxydes ainsi formés de la masse fondue sous la forme d'un laitier, on introduit dans la masse fondue un agent de sulfuration en quantité suffisante pour sulfurer la quasi-totalité du chrome présent dans la masse fondue, on refroidit la masse fondue sulfurée à une petite vitesse réglée de manière à former une matte à grains grossiers constituée principalement de sulfure de chrome, on fragmente la matte refroidie dans une mesure suffisante pour libérer ses phases individuelles et on sépare physiquement les particules de sulfure de chrome de la matte fragmentée.

2. Un procédé selon la revendication 1, dans lequel le chrome dans l'alliage ou le mélange d'alliages est allié avec au moins un des métaux nickel, cobalt ou cuivre.

3. Un procédé selon la revendication 1 ou la revendication 2, dans lequel l'agent de sulfuration est de soufre élémentaire, du sulfure de nickel, du sulfure de cobalt, du sulfure de cuivre ou un mélange de ces agents.

4. Un procédé selon l'une quelconque des revendications précédentes, dans lequel la quantité de l'agent de sulfuration qu'on utilise est suffisante pour produire une masse fondue sulfurée contenant au moins deux fois la quantité de soufrée stoechiométriquement nécessaire pour sulfurer tout le chrome présent dans la masse fondue.

5. Un procédé selon la revendication 4, dans lequel la quantité d'agent de sulfuration qu'on utilise est telle que la masse fondue sulfurée contienne 20 à 30 pour cent en poids de soufre.

6. Un procédé selon l'une quelconque des revendications précédentes, dans lequel la masse refroidie est fragmentée par broyage en particules ayant un diamètre de pas plus de 75 $\mu$m.

7. Un procédé selon l'une quelconque des revendications précédentes, dans lequel l'oxydant est de l'oxyde de fer, de l'oxyde de nickel, de l'oxyde de chrome, de l'oxyde de cobalt, de l'oxyde de cuivre, de l'oxyde de niobium ou de l'oxyde de molybdène.